# EUROPÄISCHE PATENTSCHRIFT

(11) **EP 0 660 015 B1**
(45) Veröffentlichungstag und Bekanntmachung des Hinweises auf die Patenterteilung: **13.05.1998**
(21) Anmeldenummer: 94109235.5
(22) Anmeldetag: 16.06.1994
(51) Int. Cl.: F16J 15/56

(54) **Dichtungsanordnung zur Abdichtung von zwei relativ translatorisch zueinander bewegten Maschinenteilen**
Sealing arrangement for two machine parts relatively moveable in translation
Dispositif d'étanchéité pour deux pièces de machine mobiles en translation l'une relativement par rapport à l'autre

(30) Priorität: 22.12.1993 DE 4343924
(43) Veröffentlichungstag der Anmeldung: 28.06.1995
(73) Patentinhaber: Firma Carl Freudenberg, 69469 Weinheim (DE)
(72) Erfinder: Barillas, Reina Gonzalo, D-35260 Stadtallendorf (DE)

(56) Entgegenhaltungen:
- CH-A- 525 414
- DE-A- 2 654 452
- US-A- 3 494 625

## Beschreibung

Die Erfindung betrifft eine Dichtungsanordnung zur Abdichtung von zwei relativ translatorisch zueinander bewegten Maschinenteilen, die einander umschließen, umfassend eine Dichtung mit einem statisch abdichtenden ersten Dichtteil, der im Nutgrund einer im wesentlichen U-förmig in Richtung des relativ beweglichen Maschinenteils geöffneten Nut von einem der Maschinenteile angeordnet ist und einen dynamisch abdichtenden zweiten Dichtteil, der die relativ zum Nutgrund bewegliche Oberfläche des anderen Maschinenteils dichtend berührt, wobei der erste und der zweite Dichtteil einstückig ineinander übergehend ausgebildet sind und aus elastomerem Werkstoff bestehen, wobei der erste und der zweite Dichtteil durch einen sich im wesentlichen in radialer Richtung erstreckenden, kreisringförmig ausgebildeten und membranartig dünnen Verbindungssteg verbunden sind, wobei der Verbindungssteg einstückig und materialeinheitlich mit den beiden Dichtteilen ausgebildet ist und wobei der Verbindungssteg auf einander in axialer Richtung gegenüberliegenden Seiten Anschlagpuffer aufweist, die zur Begrenzung von axialen Extremauslenkungen an die benachbart angrenzenden Begrenzungsflächen der Nut anlegbar sind.

Eine solche Dichtungsanordnung ist aus der CH-A-525 414 bekannt. Die Dichtungsanordnung ist zum Abdichten eines Ringspalts zwischen zwei zylindrischen, konzentrisch ineinander angeordneten und zueinander translatorisch verschieblichen Teilen vorgesehen, wobei eine elastische, den Ringspalt überbrückende Dichtung innerhalb der Nut angeordnet ist, deren Seitenwandungen im wesentlichen rechtwinklig zum Nutgrund der Nut verlaufen. Die Aufgabe des vorbekannten Dichtrings ist darin zu sehen, eine Dichtungsanordnung mit einer Dichtung zu zeigen, die in beide Richtungen wirkend ausgebildet ist. Die in Richtung des relativ beweglichen Maschinenteils geöffnete Nut weist zur Lösung der Aufgabe nahe des Nutgrunds einen sich zum Nutgrund hin konisch verjüngenden Abschnitt auf, dessen schräge Seitenwandungen mit dem Nutgrund einen stumpfen Winkel einschließen, wobei die stirnseitigen Begrenzungsflächen der Dichtung mit axialem Abstand vom Nutgrund unter Vorspannung auf den schrägen Seitenwandungen der sich konisch verjüngenden Abschnitte anliegen.

Eine weitere Dichtungsanordnung ist aus der DE 26 54 452 A1 bekannt. Die Dichtung ist zur Durchflußbegrenzung in einem Steuerventil vorgesehen und umfaßt einen ringförmigen Stützkörper aus unnachgiebigem Werkstoff, der mit einem radial inneren und einem radial äußeren Dichtteil verbunden ist. Die vorbekannte Dichtung weist eine vergleichsweise geringe Einbaulänge in axialer Richtung auf, wobei die beiden Dichtteile unter elastischer Vorspannung mit ihren Dichtlippen jeweils an die abzudichtenden Flächen angelegt sind.

Der Erfindung liegt die Aufgabe zugrunde, eine Dichtungsanordnung der vorbekannten Art derart weiterzuentwickeln, daß die Dichtwirkung sowohl des ersten als auch des zweiten Dichtteils durch eine verstärkte Anpressung an die abzudichtenden Flächen erhöht und somit verbessert wird.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß der zweite Dichtteil axial beiderseits durch Flächen begrenzt ist die jeweils mit zumindest einer sich im wesentlichen in radialer Richtung erstreckenden Ausnehmung Ausnehmung versehen sind und daß die abzudichtenden Räume axial beiderseits der Dichtung und die jeweils angrenzenden Kammern der in axialer Richtung unterteilten Nut gemeinsam druckbeaufschlagbar miteinander verbunden sind. Die beiden Dichtteile weisen im Vergleich zu Dichtlippen nur vernachlässigbar geringe Relaxationserscheinungen während einer langen Gebrauchsdauer auf. Durch die Festlegung der beiden Dichtteile mittels des Verbindungsstegs, der im wesentlichen keine tragende sondern lediglich eine dichtende Funktion ausübt, ist die Flexibilität der gesamten Dichtung in radialer Richtung außerordentlich hoch. Die hohe Flexibilität bedingt eine sehr reibungsarme Relativbeweglichkeit der beiden zueinander beweglichen Maschinenteile und dadurch einen vergleichsweise geringen Verschleiß des dynamisch beanspruchten zweiten Dichtteils. Ferner ist die Dichtung in axialer Richtung kurz bauend, so daß zusätzlich durch die geringe Auflagefläche des zweiten Dichtteils an der abzudichtenden Fläche eine weiter verringerte Reibung über ein breitbandiges Druckniveau erzielt wird. Die gesamte Dichtung ist einstückig und materialeinheitlich hergestellt, was in fertigungstechnischer und wirtschaftlicher Hinsicht von hervorzuhebendem Vorteil ist. Durch diese Ausgestaltung ist außerdem die Wiederverwertbarkeit verbrauchter und/oder beschädigter Dichtungen wesentlich vereinfacht. Dadurch, daß der Verbindungssteg auf einander in axialer Richtung gegenüberliegenden Seiten Anschlagpuffer aufweist, die zur Begrenzung von axialen Extremauslenkungen an die benachbart angrenzenden Begrenzungsflächen der Nut anlegbar sind, ist eine Abstützung des membranartig dünn ausgebildeten Verbindungsstegs bei einseitiger Druckbeaufschlagung der Dichtung jederzeit gewährleistet. Eine übermäßig hohe Materialbeanspruchung, insbesondere im Übergangsbereich zwischen dem Verbindungssteg und den in radialer Richtung beiderseits angrenzenden Dichtteilen, wird durch diese Ausgestaltung zuverlässig vermieden. Gebrauchsdauerverringernde Überdehnungen des elastomeren Werkstoffs sind dadurch ausgeschlossen. Die Anschlagpuffer können beispielsweise wulstförmig und umfangsseitig umlaufend ausgebildet sein. Auch noppenförmige Anschlag puffer sind denkbar. Die Anschlagpuffer können in einer Ebene parallel zur Symmetrieachse der Dichtungsanordnung angeordnet sein oder, bezogen auf die Ebene, in radialer Richtung versetzt zueinander. Bei der in radialer Richtung versetzten Anordnung der Anschlagpuffer ist von Vorteil, daß eine in fertigungstechnischer Hinsicht unerwünscht hohe Materialanhäufung zwischen dem Verbindungssteg und den beiderseits angrenzenden Anschlagpuffern vermieden wird.

Der zweite Dichtteil ist axial beiderseits durch Flächen begrenzt, die jeweils mit zumindest einer sich im wesentlichen in radialer Richtung erstreckenden Ausnehmung versehen sind, wobei die abzudichtenden Räume axial beiderseits der Dichtung und die jeweils angrenzenden Kammern der in axialer Richtung unterteilten Nut gemeinsam druckbeaufschlagbar miteinander verbunden sind. Hierbei ist von Vorteil, daß das druckbeaufschlagbare Steuermedium problemlos die dem relativen Überdruck zugewandte Seite der Dichtung beaufschlagen kann und dadurch die Dichtwirkung sowohl des ersten als auch des zweiten Dichtteils durch eine verstärkte Anpreßung an die abzudichtenden Flächen erhöht und somit verbessert wird.

Der Verbindungssteg kann, im Querschnitt betrachtet, in radialer Richtung jeweils von den Dichtteilen bis zu den Anschlagpuffern bikonkav und ohne sprunghafte Querschnittsveränderungen gestaltet sein. Die Verformungsbeanspruchungen in einzelnen Bereichen der Dichtung können dadurch weiter reduziert werden, was einer erhöhten Gebrauchsdauer zugute kommt.

Der erste und der zweite Dichtteil können im wesentlichen übereinstimmend und O-Ring-förmig gestaltet sein. Das zweite Dichtteil kann beispielsweise eine gerundet ausgeführt Dichtfläche aufweisen, die mit der abzudichtenden Fläche des relativ beweglichen Bauteils dichtend in Verbindung steht. Durch die einfache geometrische Form der Dichtteile ist die Herstellung der Dichtung besonders einfach.

Die erfindungsgemäße Dichtungsanordnung ist nachfolgend in den Fig. 1 bis 4 näher beschrieben.
Es zeigen in schematischer Darstellung:
Fig. 1 einen Ausschnitt aus einem ersten Ausführungsbeispiel in geschnittener Darstellung,
Fig. 2 eine Ansicht der als Einzelteil dargestellten Dichtung aus Fig. 1,
Fig. 3 ein zweites Ausführungsbeispiel einer Dichtungsanordnung mit einer, im Vergleich zu dem Ausführungsbeispiel aus Fig. 1, geänderten Dichtung.
Fig. 4 eine Dichtung als Einzelteil in perspektivischer Darstellung.

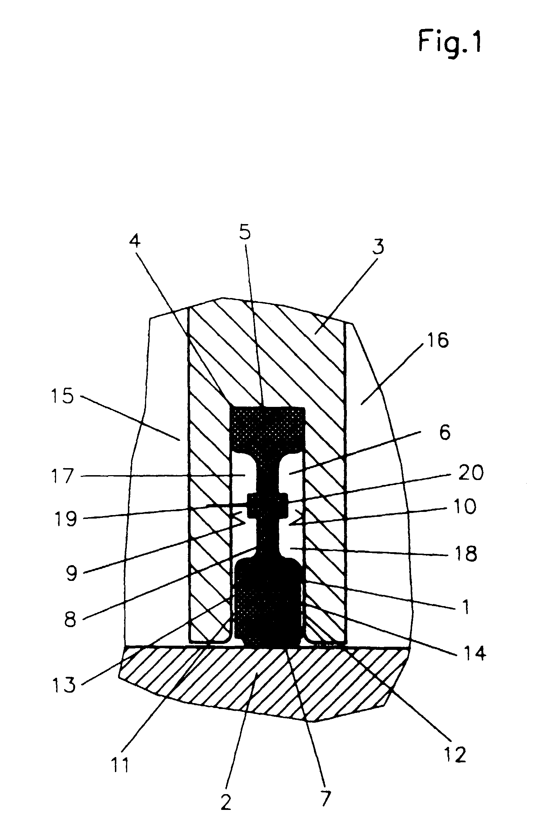

In den Fig. 1 bis 3 ist jeweils ein Ausführungsbeispiel einer Dichtungsanordnung gezeigt, die durch einen Zylinder 2 und einen druckluftbeaufschlagbaren, relativ beweglichen Kolben 3 gebildet ist, wobei der Umfangsspalt zwischen dem Kolben und dem Zylinder durch eine Dichtung 1 abgedichtet ist. Die Dichtung 1 umfaßt zwei Dichtteile 4, 7 von denen der erste Dichtteil 4 im Nutgrund 5 einer Nut 6 des Kolbens 3 angeordnet ist und den Nutgrund 5 und die beiden axialen Begrenzungsflächen 9, 10 der Nut 6 unter elastischer Vorspannung dichtend berührt. Das dynamisch abdichtende zweite Dichtteil 7 dichtet die Oberfläche des den Kolben 3 umschließenden Zylinders 2 gegen die Umgebung ab. Der erste und der zweite Dichtteil 4, 7 sind durch einen sich in radialer Richtung erstreckenden Verbindungssteg 8 miteinander verbunden, wobei der Verbindungssteg 8 die Nut 6 in diesem Ausführungsbeispiel in zwei gleichgroße Teilbereiche unterteilt. Davon abweichende Ausgestaltungen sind ebenfalls möglich und insbesondere dann sinnvoll, wenn der Kolben und somit der Verbindungssteg in axialer Richtung einerseits stets höher druckbeaufschlagt wird, als in axialer Richtung andererseits. In einem solchen Falle wäre von Vorteil, wenn der Verbindungssteg auf der dem relativ höheren Druck abgewandten Seite näher an die Begrenzungsfläche der Nut 6 angenähert wäre, um druckbedingte Verformungen in unbedenklichen Grenzen zu halten. Der Verbindungssteg ist kreisringförmig ausgestaltet und membranartig dünn. Die Dichtung besteht in beiden Ausführungsbeispielen materialeinheitlich aus Polyurethan. Die Dichtungen 1 sind in beiden Ausführungsbeispielen im wesentlichen spiegelbildlich zu einer Ebene ausgebildet, die sich in radialer Richtung erstreckt und die Nut - in axialer Richtung betrachtet - mittig unterteilt.

In Fig. 1 ist der Verbindungssteg 8 mit Anschlagpuffern 19, 20 versehen, die einander gegenüberliegend angeordnet sind. Die Anschlagpuffer sind jeweils wulstförmig ausgebildet und erstrecken sich umfangsseitig um den zweiten Dichtteil 7. Der zweite Dichtteil 7 ist durch Flächen 11, 12 in axialer Richtung begrenzt, die jeweils von Ausnehmungen 13, 14 durchdrungen sind, wobei sich die Ausnehmungen 13, 14 in radialer Richtung erstrecken. Eine derartige Ausgestaltung ist erforderlich, um bei Druckbeaufschlagung des Zylinders 2 eine Druckfortpflanzung aus den Räumen 15, 16 des Zylinders 2 in die jeweils angrenzenden Kammern 17, 18 der Nut 6 und daraus resultierend, ein verbessertes Abdichtungsergebnis zu erzielen.

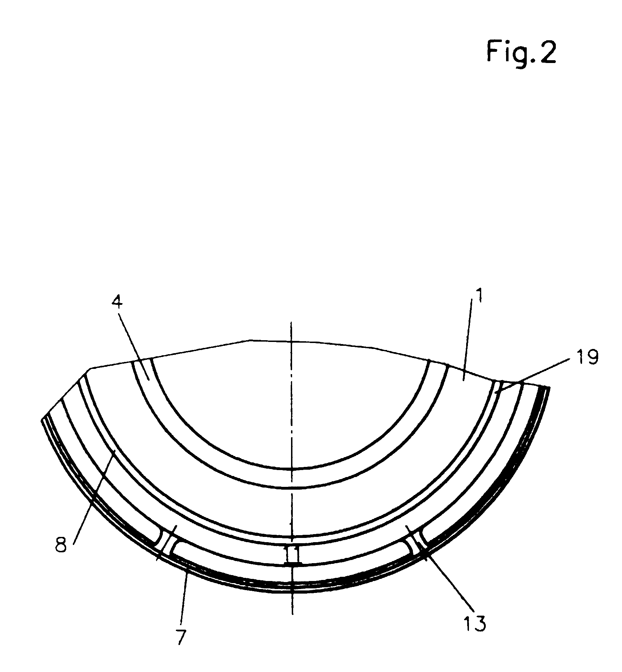

In Fig. 2 sind die Ausnehmungen 13 der Dichtung 1 als Ausschnitt in einer Ansicht dargestellt. Die Ausnehmungen 13 sind gleichmäßig in Umfangsrichtung verteilt, wobei in diesem Ausführungsbeispiel fünf Ausnehmungen 13 in einem Abstand von jeweils 72° zur Anwendung gelangen.

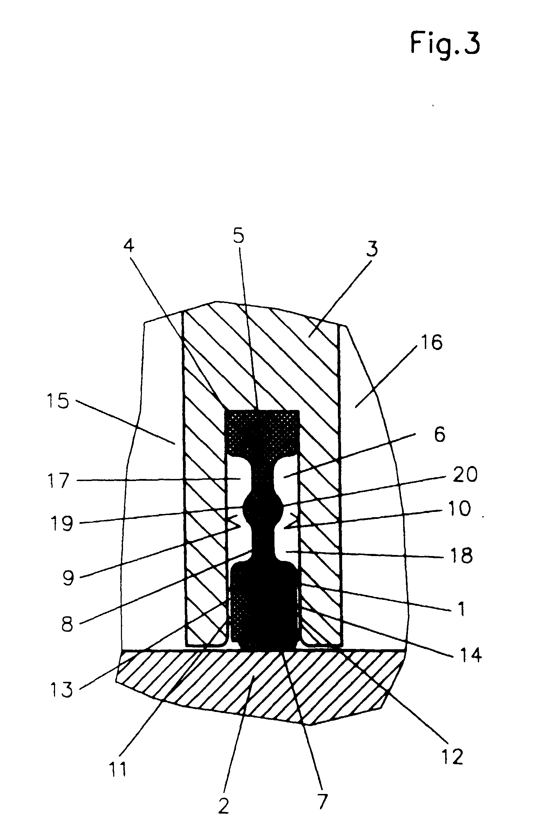

In Fig. 3 sind die Anschlagpuffer 19, 20 gerundet ausgebildet und gehen ohne sprunghafte Querschnittsveränderung der Dichtung 1 in den ersten und zweiten Dichtteil 4, 7 über. Die Gebrauchsdauer ist dadurch besonders groß, da Kerbwirkungen bei einseitiger Druckbeaufschlagung der Dichtung 1 auf ein Minimum reduziert sind.

Die Dichtung 1 in beiden Ausführungsbeispielen gemäß den Fig. 1 und 3 zeichnet sich jeweils durch eine hohe Flexibilität in radialer Richtung aus. die Reibungskräfte bei einer Relativverschiebung von Kolben und Zylinder zueinander sind dadurch reduziert. Der Verschleiß der Dichtung 1 ist sehr gering und die Anschlagpuffer 19, 20 bewirken, daß gebrauchsdauerverringernde Belastungen auf die Verbindungsstege 8 bei Druckbeaufschlagung der Dichtung 1 zuverlässig vermieden werden.

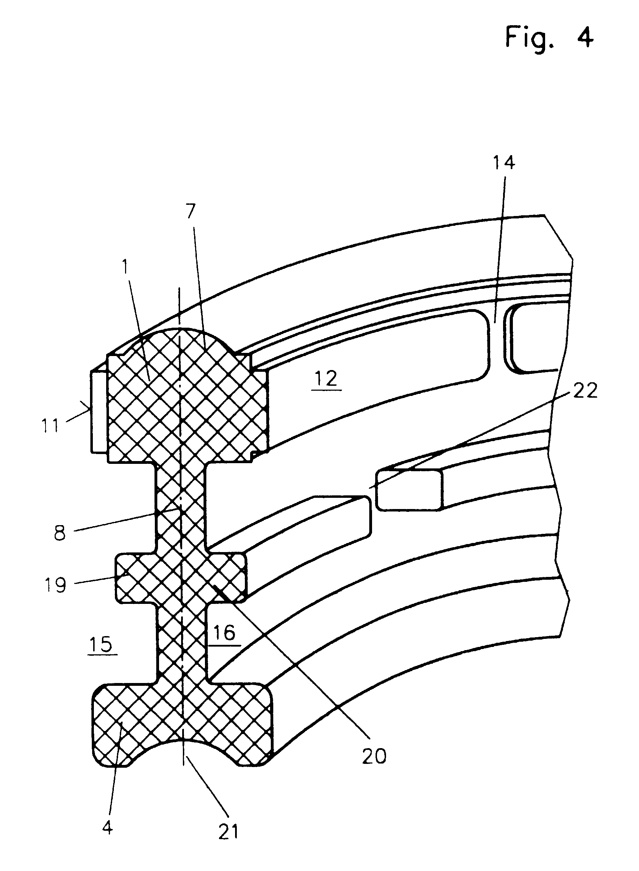

In Fig. 4 ist ein Ausschnitt aus einer Dichtung 1 in perspektivischer Darstellung gezeigt. Das erste, statisch abdichtende Dichtteil 4 ist auf der dem Nutgrund 6 zugewandten Seite mit einer nutförmigen Eintiefung 21 versehen. Die Anschlagpuffer 19, 20 erstrecken sich in Umfangsrichtung zwischen dem ersten und dem zweiten Dichtteil 4, 7 und sind mit radialen Durchbrechungen 22 versehen.

## Patentansprüche

1. Dichtungsanordnung zur Abdichtung von zwei relativ translatorisch zueinander bewegten Maschinenteilen (2, 3), die einander umschließen, umfassend eine Dichtung (1) mit einem statisch abdichtenden ersten Dichtteil (4), der im Nutgrund (5) einer im wesentlichen U-förmig in Richtung des relativ beweglichen Maschinenteils geöffneten Nut (6) von einem der Maschinenteile (2, 3) angeordnet ist und einen dynamisch abdichtenden zweiten Dichtteil (7), der die relativ zum Nutgrund (5) bewegliche Oberfläche des anderen Maschinenteils (3, 2) dichtend berührt, wobei der erste und der zweite Dichtteil (4, 7) einstückig ineinander übergehend ausgebildet sind und aus elastomerem Werkstoff bestehen, wobei der erste und der zweite Dichtteil (4, 7) durch einen sich im wesentlichen in radialer Richtung erstreckenden, kreisringförmig ausgebildeten und membranartig dünnen Verbindungssteg (8) verbunden sind, wobei der Verbindungssteg (8) einstückig und materialeinheitlich mit den beiden Dichtteilen (4, 7) ausgebildet ist und wobei der Verbindungssteg (8) auf einander in axialer Richtung gegenüberliegenden Seiten Anschlagpuffer (19, 20) aufweist, die zur Begrenzung von axialen Extremauslenkungen an die benachbart angrenzenden Begrenzungsflächen (9, 10) der Nut (6) anlegbar sind,
dadurch gekennzeichnet, daß der zweite Dichtteil (7) axial beiderseits durch Flächen (11, 12) begrenzt ist, die jeweils mit zumindest einer sich im wesentlichen in radialer Richtung erstreckenden Ausnehmung (13, 14) versehen sind und daß die abzudichtenden Räume (15, 16) axial beiderseits der Dichtung (1) und die jeweils angrenzenden Kammern (17, 18) der in axialer Richtung unterteilten Nut (6) gemeinsam druckbeaufschlagbar miteinander verbunden sind.

2. Dichtungsanordnung nach Anspruch 1, dadurch gekennzeichnet, daß der Verbindungssteg (8) - im Querschnitt betrachtet - in radialer Richtung jeweils von den Dichtteilen (4, 7) bis zu den Anschlagpuffern (19, 20) bikonkav und ohne sprunghafte Querschnittsveränderungen gestaltet ist.

3. Dichtungsanordnung nach einem der Ansprüche 1 oder 2, dadurch gekennzeichnet, daß der erste und der zweite Dichtteil (4, 7) im wesentlichen übereinstimmend und O-Ring-förmig gestaltet sind.

## Claims

1. A sealing arrangement for sealing two machine parts (2, 3) which are moved relative to one another in translation and surround one another, comprising a seal (1) with a statically sealing first sealing part (4), which is arranged in the groove base (5) of a groove (6) in one of the machine parts (2, 3), which groove is open essentially in a U-shape in the direction of the relatively movable machine part, and with a dynamically sealing second sealing part (7) which, in a sealing manner, touches the surface of the other machine part (3, 2), which surface is movable relative to the groove base (5), the first and the second sealing parts (4, 7) being designed to merge integrally into one another and consisting of an elastomer material, the first and the second sealing parts (4, 7) being connected by means of a connecting web (8) which extends essentially in the radial direction, is of annular design and is thin in the manner of a membrane, the connecting web (8) being integral with and of the same material as the two sealing parts (4, 7), and the connecting web (8) having, on opposite sides in the axial direction, stop buffers (19, 20) which can be placed against the adjacent boundary surfaces (9, 10) of the groove (6) to limit extreme axial deflections, characterized in that the second sealing part (7) is bounded axially on both sides by surfaces (11, 12) which are each provided with at least one recess (13, 14) extending essentially in the radial direction, and in that the spaces (15, 16) to be sealed off axially on both sides of the seal (1) and the respectively adjoining chambers (17, 18) of the groove (6) which is subdivided in the axial direction are connected to one another so that they can be pressurized at the same time.

2. A sealing arrangement according to claim 1, characterized in that the connecting web (8) - viewed in the cross-section - is designed to be biconcave in the radial direction in each case from the sealing parts (4, 7) up to the stop buffers (19, 20) and without any abrupt changes in cross-section.

3. A sealing arrangement according to either of claims 1 or 2, characterized in that the first and the second sealing parts (4, 7) are configured to be essentially matching and in the shape of an O-ring.

## Revendications

1. Dispositif d'étanchéité pour deux pièces de machine (2, 3) mobiles en translation l'une relativement par rapport à l'autre et qui s'entourent réciproquement, comprenant une garniture d'étanchéité (1) avec un premier élément d'étanchéité (4) étanchéifiant de manière statique qui est situé dans le fond (5) d'une gorge (6) de l'une des pièces de machine (2, 3) qui a essentiellement une forme en U et est ouverte en direction de la pièce de machine effectuant le mouvement relatif, et avec un second élément d'étanchéité (7) étanchéifiant de manière dynamique, qui est en contact étanche avec la surface de l'autre pièce de machine (3, 2) effectuant le mouvement relatif par rapport au fond (5) de la gorge, les premier et second éléments d'étanchéité (4, 7) étant exécutés de manière à se confondre et étant formés d'une matière élastomère, les premier et second éléments d'étanchéité (4, 7) étant reliés par un élément intermédiaire de liaison (8) mince comme une membrane, exécuté de manière à avoir la forme d'une couronne et s'étendant essentiellement dans la direction radiale, l'élément intermédiaire de liaison (8) étant solidaire avec les deux éléments d'étanchéité (4, 7) et constitué du même matériau que ceux-ci, et l'élément intermédiaire de liaison (8) étant pourvu, sur les côtés opposés dans la direction axiale, de tampons de butée (19, 20) qui peuvent être amenés contre les surfaces de limitation (9, 10) contigües de la gorge (6) pour limiter les déviations axiales extrêmes, caractérisé en ce que le second élément d'étanchéité (7) est limité, dans le sens axial, sur les deux côtés, par des surfaces (11, 12) qui sont pourvues chacune d'au moins un évidement (13, 14) s'étendant essentiellement dans la direction radiale, et en ce que les espaces à rendre étanches (15, 16) situés sur les deux côtés de la garniture d'étanchéité (1) dans le sens axial communiquent avec les chambres contiguës respectives (17, 18) de la gorge (6) divisée dans le sens axial d'une manière permettant l'application d'une pression.

2. Dispositif d'étanchéité selon la revendication 1, caractérisé en ce que l'élément intermédiaire de liaison (8) - considéré en coupe - présente à chaque fois, dans la direction radiale, une forme biconcave et sans changements brusques de la section transversale des éléments d'étanchéité (4, 4) aux tampons de butée (19, 20).

3. Dispositif d'étanchéité selon l'une des revendications 1 ou 2, caractérisé en ce que les premier et second éléments d'étanchéité (4, 7) sont exécutés de manière essentiellement identique et ont la forme d'un joint torique.
